Europäisches Patentamt

European Patent Office

Office européen des brevets

(11) Publication number: **0 047 114**
**B1**

# EUROPEAN PATENT SPECIFICATION

(45) Date of publication of patent specification: **13.11.85**

(21) Application number: **81303831.2**

(22) Date of filing: **21.08.81**

(51) Int. Cl.⁴: **H 04 L 1/22,** G 05 B 23/02,
G 01 R 31/02, G 05 B 19/42,
B 25 J 9/18

(54) **Data transmission system and an industrial robot using the system.**

(30) Priority: **01.09.80 JP 119828/80**

(43) Date of publication of application:
**10.03.82 Bulletin 82/10**

(45) Publication of the grant of the patent:
**13.11.85 Bulletin 85/46**

(84) Designated Contracting States:
**DE FR GB**

(56) References cited:
**DE-B-1 513 297**
**GB-A-1 475 548**
**US-A-3 803 355**
**US-A-3 825 682**

(73) Proprietor: **FANUC LTD**
**3580, Shibokusa Aza-Komanba Oshino-mura**
**Minamitsuru-gun Yamanashi 401-05 (JP)**

(72) Inventor: **Inaba, Hajimu**
**3-16, Asahigaoka 5-chome**
**Hino-shi Tokyo (JP)**
Inventor: **Miyashita, Hideo**
**38-23, Asahigaoka 2-chome**
**Hino-shi Tokyo (JP)**

(74) Representative: **George, Sidney Arthur et al**
**GILL JENNINGS & EVERY 53-64 Chancery Lane**
**London WC2A 1HN (GB)**

EP 0 047 114 B1

Courier Press, Leamington Spa, England.

## Description

This invention relates to a data transmission system which is capable of detecting an interruption in its transmission lines, and further relates to an industrial robot using the system.

In a known data transmission system as described in United States Patent No. 3,825,682, digital signals are transmitted over a pair of transmission lines by feeding a set of digital signals to one of the transmission lines and a set of digital signals of the opposite polarity to the other transmission line. A digital output signal is produced in response to the signals received from the pair of lines, only if both sets of digital signals are received.

In equipment which includes a movable control board and an installed control apparatus (for example a teaching and operating board and a robot control apparatus in a machine tool system which is operated by a robot), transmission lines which connect the control board to the control apparatus perform an important function of data transmission. However, the operator of the equipment frequently removes the teaching and operating board, and the cables connected to it are therefore apt to become disconnected by breakage due to vibration, pulling, etc. Furthermore, when the robot is moved by the control program, the cables are subjected to similar strains. Therefore, opportunities for cable disconnection occur frequently. The failed lines sometimes short-circuit or make incomplete contact, which results in adverse effects on the other lines.

An object of the present invention is to provide a fail-safe data transmission system which includes redundant transmission lines, and in which interruption of a transmission line can be detected, the interrupted line can be disconnected, and the digital signals can be sent through the other, non-interrupted, lines, so that the transmission of signals is not interrupted.

According to the present invention there is provided a data transmission system, wherein digital signals are transmitted over a pair of transmission lines by feeding a set of digital signals to one transmission line and a set of digital signals of the opposite polarity to the other transmission line; and wherein a digital output signal is produced in response to digital signals received from the pair of transmission lines only if both of said sets of digital signals are received; characterised in that the system comprises a plurality of said pairs of transmission lines; driver means to feed the same two sets of digital signals to each pair of transmission lines; a plurality of receivers to receive the digital signals transmitted over respective pairs of transmission lines; a plurality of exclusive-OR gates each connected to a respective pair of transmission lines to produce a respective gating signal only if both sets of digital signals are received on that pair of transmission lines; a plurality of AND gates which receive outputs from the receivers and which produce corresponding outputs under control of the respective gating signals; and an OR gate which receives the outputs from the AND gates to provide the digital output signal.

An embodiment of the invention will now be described, by way of example, with reference to the accompanying drawings, in which:—

Figure 1 is a schematic block diagram of an industrial robot system;

Figure 2 is a schematic block diagram illustrating a data transmission system which is capable of detecting an interruption in any of its transmission lines;

Figure 3 is a circuit diagram of an interruption-detecting circuit of Figure 2; and

Figure 4 is a more detailed circuit diagram of a modified form of the system of Figure 2.

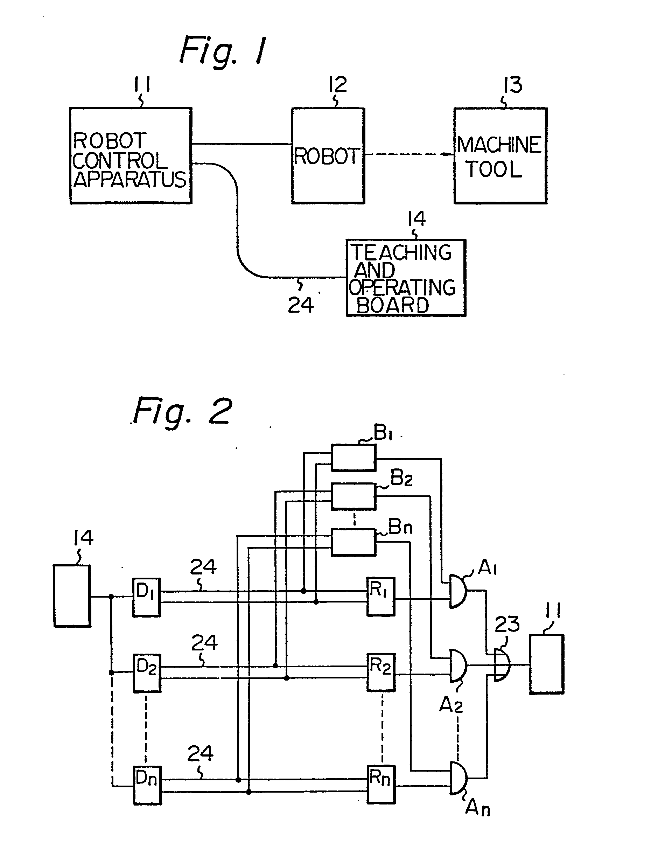

Referring to Figure 1, an industrial robot system is shown in which data are transmitted via transmission lines 24 connected between a robot control apparatus 11 and a teaching and operating control board 14. The apparatus 11 controls a robot 12 for a machine tool 13.

A schematic block diagram of a system according to the present invention is shown in Figure 2. Signals from the teaching and operating board 14 are supplied to drivers $D_1$, $D_2$—$D_n$, and output signals from the drivers $D_1$, $D_2$—$D_n$ are fed to receivers $R_1$, $R_2$—$R_n$ through a respective pair of transmission lines 24 connecting each driver and receiver. The outputs from the receivers $R_1$, $R_2$—$R_n$ are connected to first input terminals of AND gates $A_1$, $A_2$—$A_n$, respectively. Lines taken off from the lines 24 between the drivers and the receivers are connected to interruption-detecting circuits $B_1$, $B_2$—$B_n$, respectively, and the outputs from the interruption-detecting circuits are connected to the second input terminals of the AND gates $A_1$, $A_2$—$A_n$, respectively. The outputs from the AND gates $A_1$, $A_2$—$A_n$ are supplied to each input of an OR gate 23, and the output from the OR gate 23 is fed to the robot control apparatus 11.

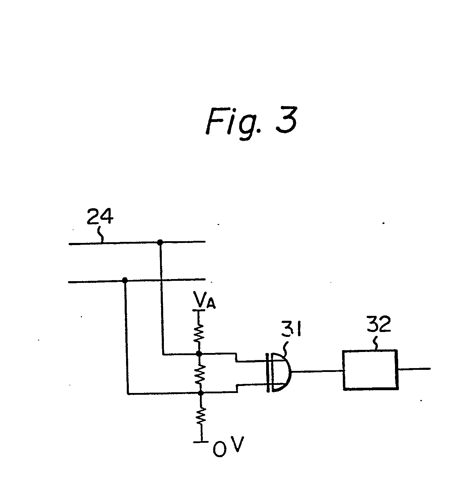

In Fig. 3, details of an interruption-detecting circuit are shown. A pair of lines taken off from a pair of transmission lines 24 are connected to respective inputs of an exclusive-OR gate 31, and the output of the exclusive-OR gate 31 is connected to a filter 32.

The operation of the above-described data transmission system is as follows. The signals from the teaching and operating board 14 are converted to pairs of signals having opposite polarity to each other at the drivers $D_1$, $D_2$—$D_n$, and the converted signals are transmitted over the pairs of the transmission lines 24, respectively. The pairs of signals on the transmission lines 24 are received by the receivers $R_1$, $R_2$—$R_n$, and the received signals are converted back to the form in which they were prior to being converted by the drivers. The reconverted signals are applied to one of the terminals of the AND gates $A_1$, $A_2$—$A_n$, respectively. Since the lines which are taken off from each transmission line 24 are supplied with pairs of signals having opposite polarity to each other, a logic "1" output is obtained from the respective exclusive-OR gate 31 when the transmission line is normal. When a transmission line is disconnected or otherwise interrupted, the output of the respective exclusive-OR gate 31 becomes a logic "0". Hence, either a normal condition or an interrupted condition can be recognised. Furthermore, after transient fluctuations are removed from the output signals of the exclusive-OR gates 31 by passing the outputs through the filters 32, the output signals are connected to the AND gates $A_1$, $A_2$—$A_n$. Only when there is no interruption of the line can the outputs of the receivers pass through the AND gates. Therefore, signals on the circuits for which the transmission lines are interrupted are not conducted through the AND gates. Such circuits are isolated from the other circuits, and the signals transmitted through the other transmission lines. After the signals have passed through the respective AND gate, they pass through the OR gate 23 and are fed to the robot control apparatus 11.

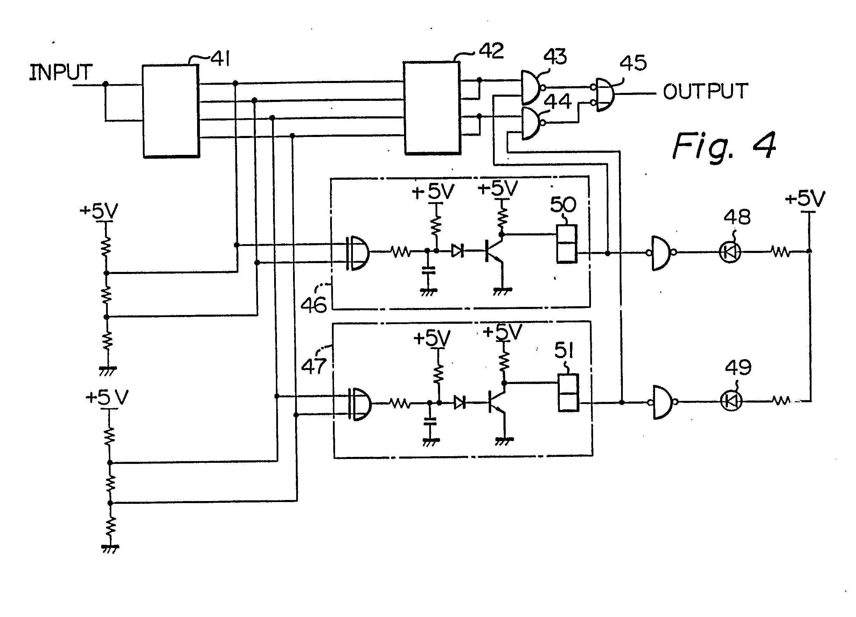

Fig. 4 shows a more-detailed circuit diagram of part of the data transmission system of the present invention. A driver 41 to which is applied the input signal is connected to a receover 42 via two pairs of transmission lines. Two outputs of the receiver 42 pass through AND gates 43 and 44, respectively, and the outputs of the AND gates pass through an OR gate 45. The two pairs of transmission lines are connected to interruption-detecting circuits 46 and 47, respectively, and in the interruption-detecting circuits the signals from the transmission lines pass through exclusive-OR gates, filters, and flip-flops 50 and 51. The output lines of the interruption-detecting circuits are connected to light-emitting diodes 48 and 49, and when a transmission line is disconnected, that line is indicated by the lighting of the respective light-emitting diode. The outputs of the flip-flops 50 and 51 are also used for feeding gating signals to the AND gates 43 and 44.

Although in the above-described embodiment the data transmission system is applied to an industrial robot system, the present invention can be utilised for other purposes.

## Claims

1. A data transmission system, wherein digital signals are transmitted over a pair of transmission lines (24) by feeding a set of digital signals to one transmission line and a set of digital signals of the opposite polarity to the other transmission line; and wherein a digital output signal is produced in response to digital signals received from the pair of transmission lines only if both of said sets of digital signals are received; characterised in that the system comprises a plurality of said pairs of transmission lines; driver means ($D_1$, $D_2$—$D_n$) to feed the same two sets of digital signals to each pair of transmission lines; a plurality of receivers ($R_1$, $R_2$—$R_n$) to receive the digital signals transmitted over respective pairs of transmission lines; a plurality of exclusive-OR gates (31) each connected to a respective pair of transmission lines to produce a respective gating signal only if both sets of digital signals are received on that pair of transmission lines; a plurality of AND gates ($A_1$, $A_2$—$A_n$) which receive outputs from the receivers and which produce corresponding outputs under control of the respective gating signals; and an OR gate (23) which receives the outputs from the AND gates to provide the digital output signal.

2. A system as claimed in Claim 1, characterised by a respective filter (32) connected between each exclusive-OR gate (31) and the corresponding AND gate ($A_1$, $A_2$—$A_n$) to provide the gating signal.

3. An industrial robot system comprising a robot (12), a control board (14) and a robot control apparatus (11); characterised by a data transmission system as claimed in Claim 1 or Claim 2 connecting the control board to the robot control apparatus.

## Revendications

1. Un système de transmission de données, dans lequel les signaux digitaux sont transmis sur une paire de lignes de transmission (24), en alimentant l'une des lignes de transmission par un ensemble de signaux digitaux et l'autre ligne de transmission par un ensemble de signaux digitaux de polarité opposée; et dans lequel un signal digital de sortie est produit en réponse aux signaux digitaux reçus de la paire de lignes de transmission seulement si les deux ensembles susdits de signaux digitaux sont reçus, caractérisé en ce que le système comprend une pluralité desdites paires de lignes de transmission; des circuits de commande ($D_1$, $D_2$—$D_n$) destinés à alimenter chaque paire de ligne de transmission par les mêmes deux ensembles de signaux digitaux; une pluralité de récepteurs ($R_1$, $R_2$—$R_n$) destinés à recevoir les signaux digitaux transmis respectivement sur les paires de lignes de transmission; une pluralité de portes OU-exclusif (31), chacune respectivement connectée à une paire de lignes de transmission pour produire respectivement un signal de déclenchement seulement si les deux ensembles de signaux digitaux sont reçus sur cette paire de lignes de transmission; une pluralité de portes ET ($A_1$, $A_2$—$A_n$) qui reçoivent les signaux de sortie des récepteurs et qui produisent les sorties correspondantes sous le contrôle des signaux de déclenchement respectifs; et une porte OU (23) qui reçoit les signaux de sortie des portes ET afin de fournir le signal digital de sortie.

2. Un système tel que revendiqué dans la revendication 1, caractérisé par un filtre (32) respectivement connecté entre chaque porte OU-exclusif (31) et la porte ET ($A_1$, $A_2$—$A_n$) correspondant afin de fournir le signal de déclenchement.

3. Un système de robot industriel comprenant un robot (12), un pupitre de commande (14) et un appareil de commande de robot (11); caractérisé par un système de transmission de données tel que revendiqué dans la revendication 1 ou dans la revendication 2, connectant le pupitre de commande à l'appareil de commande de robot.

**Patentansprüche**

1. Datenübertragungssystem, bei dem Digitalsignale dadurch über ein Paar von Übertragungsleitungen (24) übertragen werden, daß ein Satz von Digitalsignalen in eine Übertragungsleitung eingespeist wird und ein Satz von Digitalsignalen entgegengesetzter Polarität in die andere Übertragungsleitung eingespeist wird, und bei dem ein Digitalausgangssignal als Antwort auf die von dem Paar von Übertragungsleitungen empfangenen Digitalsignale nur dann erzeugt wird, wenn beide Sätze von Digitalsignalen empfangen werden, dadurch gekennzeichnet, daß das System aufweist: Eine Vielzahl der Paare von Übertragungsleitungen, Treiberanordnungen ($D_1$, $D_2$—$D_n$) zur Speisung der gleichen beiden Sätze von Digitalsignalen in jedes Paar von Übertrangungsleitungen, eine Vielzahl von Empfängern ($R_1$, $R_2$—$R_n$) zum Empfang der über jeweilige Paare von Übertragungsleitungen übertragenen Digitalsignale, eine Vielzahl von EXCLUSIV-oder-Gliedern (31), von denen jedes an ein jeweiliges Paar von Übertragungsleitungen angeschlossen ist, um ein jeweiliges Torsteuersignal nur dann zu erzeugen, wenn beide Sätze von Digitalsignalen von diesem Paar von Übertragungsleitungen empfangen werden, eine Vielzahl von Und-Glieder ($A_1$, $A_2$—$A_n$), die die Ausgangssignale von den Empfängern empfangen und unter der Steuerung durch die jeweiligen Torsteuersignale entsprechende Ausgangssignale erzeugen, und ein ODER-Glied (23), das die Ausgangssignale von den UND-Gliedern zur Lieferung des Digitalausgangssignals empfängt.

2. System nach Anspruch 1, gekennzeichnet durch ein jeweiliges Filter (32), das zwischen jedes EXCLUSIV-ODER-Glied (31) und das zugehörige UND-Glied ($A_1$, $A_2$—$A_n$) zur Lieferung des Torsteuersignals geschaltet ist.

3. Industrierobotersystem umfassend einen Roboter (12), eine Steuertafel (14) und eine Robotersteuervorrichtung (11), gekennzeichnet durch ein Datenübertragungssystem nach Anspruch 1 oder 2, das die Steuertafel mit der Robotersteuervorrichtung verbindet.

# Fig. 1

# Fig. 2

# Fig. 3

INPUT

Fig. 4

OUTPUT

+5V +5V +5V +5V +5V +5V

41 42 43 44 45 46 47 48 49 50 51